# EUROPEAN PATENT SPECIFICATION

(11) **EP 2 133 566 B1**
(45) Date of publication and mention of the grant of the patent: **20.11.2013**
(21) Application number: 09162374.4
(22) Date of filing: 10.06.2009
(51) Int. Cl.: F03G 7/06, A61B 1/005

(54) **Shape memory alloy actuator**
Formspeicherlegierungsaktuator
Actionneur en alliage à mémoire de forme

(30) Priority: 10.06.2008 JP 2008151740
(43) Date of publication of application: 16.12.2009
(73) Proprietor: Olympus Corporation, Shibuya-ku Tokyo 151-0072 (JP)
(72) Inventor: Takahashi, Masaya, Tokyo 151-0072 (JP)
(74) Representative: Winter, Brandl, Fürniss, Hübner, Röss, Kaiser, Polte - Partnerschaft

(56) References cited:
- US-A- 5 531 664
- US-A1- 2004 097 791
- US-A1- 2007 100 209

## Description

### BACKGROUND OF THE INVENTION

### Field of the Invention

The present invention relates to a shape memory alloy actuator.

### Description of the Related Art

A shape memory alloy changes its shape with transformation caused by a change in the temperature. Actuators that utilize deformation of the shape memory alloy have characteristics that are advantageous, for example, in reducing the size and weight of the actuators.

For example, in an actuator disclosed in Japanese Patent Application Laid-Open No. 2008-23275, one end of a wire member made of a shape memory alloy (which will be sometimes referred to as an SMA or a shape memory alloy wire hereinafter) is fixed and the other end is a movable. This document discloses a technique in which the movable end is driven by a stress of a bias spring and a contracting force generated by a change in the length of the shape memory alloy wire resulting from a change in the temperature caused by heating the shape memory alloy wire with a electrical power supply thereto.

In an actuator that uses a bias spring and an SMA wire like the above-described prior art, in order to achieve a further reduction in the size of the actuator, in particular a reduction in the diameter of the actuator, it is necessary to make the diameter of the bias spring small. The smaller the diameter of the bias spring is, the more effective the use of a metal bias spring is in order to achieve good spring performance. The shape memory alloy wire serving as a driving source of the actuator is heated by supplying electric power or current thereto. Therefore, when the bias spring is made of a metal, it is desirable that the wire of the shape memory alloy wire is electrically insulated from the bias spring to ensure stable expansion and compression of the spring.

US 2007/100209 A1 discloses an actuator according to the preamble of claim 1.

### SUMMARY OF THE INVENTION

The present invention has been made in view of the above described situation and has as an object to provide a shape memory alloy actuator in which the bias spring exhibits stable performance and the shape memory alloy wire is electrically insulated from the bias spring.

To solve the above-described problem and to achieve the above object, according to the present invention, there is provided a shape memory alloy actuator comprising a shape memory alloy wire that contracts when heated by electric power supply and expands when cooled, whereby its length changes, a first hollow member through which the shape memory alloy wire is inserted, a movable element having an end mechanically connected to the shape memory alloy wire and movable relative to the first hollow member along a direction along which the length of the shape memory wire changes, an elastic member that is arranged between the movable element and the first hollow member and by which an external force is exerted on the movable element in a direction in which the shape memory alloy wire expands, an insulation member joined to the movable element, wherein a part of the insulation member is inserted in the first hollow member in a movable manner, and the shape memory alloy wire is connected to the end of the inserted part.

According to a preferred mode of the present invention, it is desirable that the shape memory alloy wire be fixedly attached on an end portion of the insulation member.

According to another preferred mode of the present invention, it is desirable that the insulation member have a hollow structure, and the shape memory alloy wire be inserted in the insulation member.

According to still another preferred mode of the present invention, it is desirable that the actuator further comprise a second hollow member fixed in the interior of the first hollow member, and the shape memory alloy wire be inserted in the second hollow member, and an end of the second hollow member that is not fixed to the first hollow member be fixedly attached to an end of the shape memory alloy wire.

According to still another preferred mode of the present invention, it is desirable that the second hollow member be bendable.

### BRIEF DESCRIPTION OF THE DRAWINGS

Figs. 1A and 1B schematically show, partly in cross section, the structure of a shape memory alloy actuator according to a first embodiment of the present invention;
Fig. 2 schematically shows, partly in cross section, the structure of a shape memory alloy actuator according to a second embodiment of the present invention;
Fig. 3 schematically shows, partly in cross section, the structure of a shape memory alloy actuator according to a third embodiment of the present invention.

### DETAILED DESCRIPTION OF THE INVENTION

In the following, embodiments of the shape memory alloy actuator according to the present invention will be described in detail with reference to the accompanying drawings. It should be understood that the present invention is not limited to the embodiments.

### (First Embodiment)

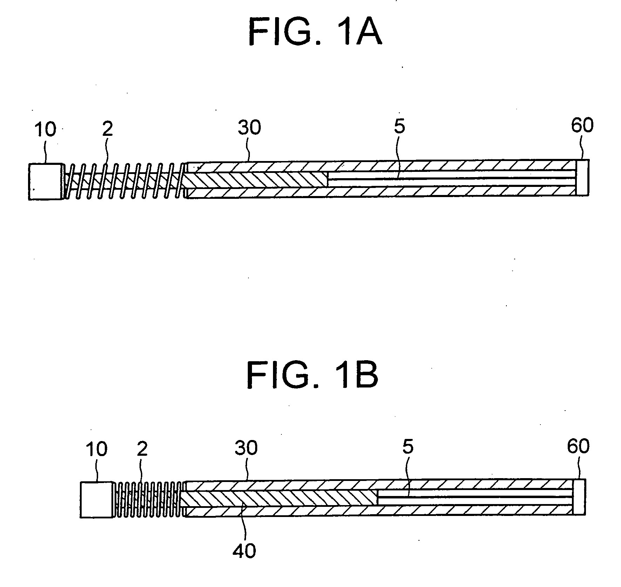

A shape memory alloy actuator according to a first embodiment of the present invention will be described. Figs. 1A and 1B illustrate the structure of an SMA wire according to the first embodiment partly in cross section. The SMA wire 5 contracts when heated with electric power supply and expands when cooled. The power supply apparatus is not shown in Fig. 1A or 1B.

Fig. 1A shows a cross section of the actuator in the state in which the SMA wire 5 has been expanded by cooling. One end of the SMA wire 5 is fixed to a fixing member 60, which constitutes a solderless terminal. The fixing member 60 is fixed to an insulation cylinder 30 or a first hollow member. The other end of the SMA wire 5 is connected to a cylindrical insulation member 40. The insulation member 40 is connected with a movable element 10.

The insulation member 40 is inserted in the insulation cylinder 30. The insulation member 40 is movable in the interior of the insulation cylinder 30 in the horizontal direction in Fig. 1A and Fig. 1B. The movable element 10 moves with the movement of the insulation member 40. A bias spring 2 is a compression coil spring. Thus, it exerts a stress on the movable element 10 in the leftward direction in Figs. 1A and 1B.

In Fig. 1A, the SMA wire 5 is in the expanded state. Therefore, a leftward (in Fig. 1A) stress exerted by the bias spring 2 produced a leftward stress in the movable element 10. The movable element 10 is kept stationary at the position determined by the length of the SMA wire 5 and the length of the insulation member 40. A stopper may be provided to mechanically stop the movement of the movable element 10, as will be naturally understood.

Fig. 1B illustrates the state in which the SMA wire 5 has been contracted by heating with electric power supply. When the SMA wire 5 contracts, the contracting force of the SMA wire 5 is stronger than the stress of the bias spring 2. Therefore, the movable element 10 is displaced rightward from the position shown in Fig. 1A.

Thus, the shape memory alloy actuator is adapted to prevent electrical connection between the bias spring 2 and the SMA wire 5. Thus, at the time of heating with electric power supply, power loss due to current flow from the SMA wire 5 to the bias spring 2 can be prevented.

The bias spring 2 is supported by the insulation member 40 that serves as a shaft that passes through the bias spring 2. Thus, repetitive expansion and compression of the bias spring 2 can be performed stably, even if the spring has such a high length-to-diameter ratio that does not allow it to keep its spring shape by itself.

Furthermore, when the position of the movable element 10 is controlled by controlling the length of the SMA wire 5 by feedback based on the resistance of the SMA wire 5, reliable monitoring of the resistance of the SMA wire 5 can be ensured, because the SMA wire 5 is not in electrical contact with the bias spring 2. In addition, it is desirable that the insulation cylinder 30 be rigid in order to increase the stability of the movement of the insulation member 40 in the insulation cylinder 30.

### (Second Embodiment)

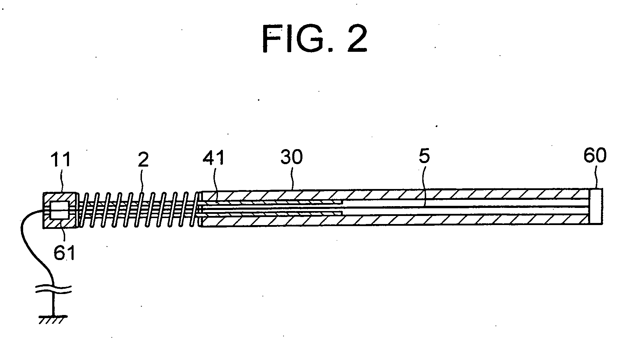

In the following, a second embodiment of the present invention will be described. Fig. 2 illustrates the structure of an SMA actuator according to the second embodiment partly in cross section. The portions same as those in the first embodiment will be denoted by the same reference signs to omit redundant description.

In this embodiment, an SMA wire 5 is inserted through a hollow insulation member 41. The hollow insulation member 41 is joined to a movable element 11. The movable element 11 has an inner passage through which the SMA wire 5 can pass.

A part of the SMA wire 5 is fixed to a fixing member 61, which constitutes a solderless terminal. The fixing member 61 is fixed to the movable element 11 in the interior of the movable element 11. Thus, the SMA wire 5 passes though the hollow insulation member 41 and the movable element 11. Thus, the SMA wire 5 can be arranged to come out from the movable element 11 without being in contact with the bias spring 2. Consequently, electrical connection between the SMA wire 5 and the electric power supply (not shown) for heating can be made simple. Simplification of the electrical connect can also be achieved by connecting a lead wire to the fixing member 61 and arranging this lead wire, instead of the SMA wire 5, to come out from the movable element 11 .

### (Third Embodiment)

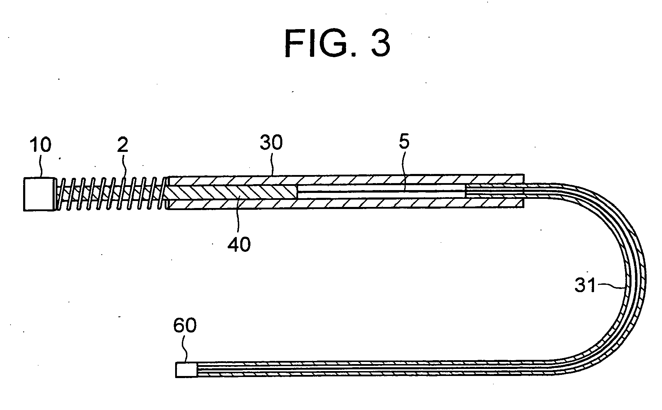

In the following, a third embodiment of the present invention will be described. Fig. 3 illustrates the structure of an SMA actuator according to the third embodiment partly in cross section. The portions same as those in the first embodiment will be denoted by the same reference signs to omit redundant description.

An insulation tube 31 or a second hollow member is fixed to an end of an insulation cylinder 30. An SMA wire 5 is inserted into the insulation tube 31. The SMA wire 5 is fixed at the end of the insulation tube 31 by the fixed end 60.

The amount of expansion and contraction of the SMA wire 5 is proportional to its length. The length of the SMA wire 5 can be made longer by providing the insulation tube 31 having a large axial length. Thus, the possible drive stroke of the movable element 10 can be increased. Furthermore, in the case where the insulation tube 31 can be bent as shown in Fig. 3, it is possible to save space by bending the insulation tube, and the actuator can be built in an apparatus having a bending mechanism.

As described above, the shape memory alloy actuator according to the present invention can be advantageously applied to an actuator having a bias spring.

The present invention can provides a shape memory alloy actuator that is advantageous in that the bias spring can operate stably and the shape memory alloy wire is electrically insulated from the bias spring.

## Claims

1. A shape memory alloy actuator comprising:
a shape memory alloy wire (5) that contracts when heated by electric power supply and expands when cooled, whereby its length changes;
a first hollow member (30) through which the shape memory alloy wire (5) is inserted;
a movable element (10, 11) having an end mechanically connected to the shape memory alloy wire (5) and movable relative to the first hollow member (30) along a direction along which the length of the shape memory wires(5) changes; and
an elastic member (2) that is arranged between the movable element (10, 11) and the first hollow member (30) and by which an external force is exerted on the movable element (10, 11) in a direction in which the shape memory alloy wire (5) expands;
**characterized in that** the shape memory alloy actuator further comprises
an insulation member (40, 41) joined to the movable element (10, 11), wherein
a part of the insulation member (40, 41) is inserted in the first hollow member (30) in a movable manner, and the shape memory alloy wire (5) is connected to the end of the inserted part.

2. A shape memory alloy actuator according to claim 1, wherein the shape memory alloy wire (5) is fixedly attached on an end portion of the insulation member (40, 41).

3. A shape memory alloy actuator according to claim 1, wherein the insulation member (41) has a hollow structure, and the shape memory alloy wire (5) is inserted in the insulation member (41).

4. A shape memory alloy actuator according to any one of claims 1 to 3, further comprising a second hollow member (31) fixed in the interior of the first hollow member (30), wherein the shape memory alloy wire (5) is inserted in the second hollow member (31), and an end of the second hollow member that is not fixed to the first hollow member (30) is fixedly attached to an end of the shape memory alloy wire (5).

5. A shape memory alloy actuator according to claim 4, wherein the second hollow member (31) is bendable.

## Patentansprüche

1. Formgedächtnislegierungsaktor umfassend:
einen Formgedächtnislegierungsdraht (5), der sich beim Erwärmen durch Zufuhr von elektrischer Energie zusammenzieht und sich beim Abkühlen ausdehnt, wobei sich seine Länge ändert;
ein erstes hohles Bauteil (30), durch welches der Formgedächtnislegierungsdraht (5) eingeführt ist;
ein bewegliches Element (10, 11), mit einem Ende, das mechanisch mit dem Formgedächtnislegierungsdraht (5) verbunden ist und relativ zu dem ersten hohlen Bauteil (30) entlang einer Richtung beweglich ist, entlang welcher sich die Länge des Formgedächtnisdrahts (5) ändert; und
ein elastisches Bauteil (2), das zwischen dem beweglichen Element (10, 11) und dem ersten hohlen Bauteil (30) angeordnet ist und durch welches eine äußere Kraft auf das bewegliche Element (10, 11) in eine Richtung ausgeübt wird, in welche sich der Formgedächtnislegierungsdraht (5) ausdehnt;
**dadurch gekennzeichnet, dass** der Formgedächtnislegierungsaktor ferner umfasst
ein Isolierbauteil (40, 41), das mit dem beweglichen Element (10, 11) verbunden ist, wobei
ein Teil des Isolierbauteils (40, 41), in das erste hohle Bauteil (30) auf eine bewegliche Weise eingeführt ist und der Formgedächtnislegierungsdraht (5) mit dem Ende des eingeführten Teils verbunden ist.

2. Formgedächtnislegierungsaktor nach Anspruch 1, wobei der Formgedächtnislegierungsdraht (5) fest an einem Endabschnitt des Isolierbauteils (40, 41) befestigt ist.

3. Formgedächtnislegierungsaktor nach Anspruch 1, wobei das Isolierbauteil (41) eine hohle Struktur aufweist und der Formgedächtnislegierungsdraht (5) in das Isolierbauteil (41) eingeführt ist.

4. Formgedächtnislegierungsaktor nach einem der Ansprüche 1 bis 3, ferner umfassend ein zweites hohles Bauteil (31), das im Inneren des ersten hohlen Bauteils (30) befestigt ist, wobei der Formgedächtnislegierungsdraht (5) in das zweite hohle Bauteil (31) eingeführt ist und ein Ende des zweiten hohlen Bauteils, das nicht an dem ersten hohlen Bauteil (30) befestigt ist, fest an einem Ende des Formgedächtnislegierungsdrahts (5) befestigt ist.

5. Formgedächtnislegierungsaktor nach Anspruch 4, wobei das zweite hohle Bauteil (31) biegsam ist.

## Revendications

1. Actionneur en alliage à mémoire de forme comprenant :
un fil en alliage à mémoire de forme (5) qui se contracte lorsqu'il est chauffé par une alimentation électrique et se dilate lorsqu'il est refroidi, moyennant quoi sa longueur change ;
un premier organe creux (30) à travers lequel le fil en alliage à mémoire de forme (5) est inséré ;
un élément mobile (10, 11) ayant une extrémité raccordée mécaniquement au fil en alliage à mémoire de forme (5) et mobile par rapport au premier organe creux (30) le long d'une direction le long de laquelle la longueur du fil à mémoire de forme (5) change ; et
un organe élastique (2) qui est agencé entre l'élément mobile (10, 11) et le premier organe creux (30) et par lequel une force externe est exercée sur l'élément mobile (10, 11) dans une direction dans laquelle le fil en alliage à mémoire de forme (5) se dilate ;
**caractérisé en ce que** l'actionneur en alliage à mémoire de forme comprend en outre
un organe d'isolation (40, 41) relié à l'élément mobile (10, 11), dans lequel
une partie de l'organe d'isolation (40, 41) est insérée dans le premier organe creux (30) de manière mobile, et le fil en alliage à mémoire de forme (5) est raccordé à l'extrémité de la partie insérée.

2. Actionneur en alliage à mémoire de forme selon la revendication 1, dans lequel le fil en alliage à mémoire de forme (5) est arrimé fixement sur une portion d'extrémité de l'organe d'isolation (40, 41).

3. Actionneur en alliage à mémoire de forme selon la revendication 1, dans lequel l'organe d'isolation (41) possède une structure creuse, et le fil en alliage à mémoire de forme (5) est inséré dans l'organe d'isolation (41).

4. Actionneur en alliage à mémoire de forme selon l'une quelconque des revendications 1 à 3, comprenant en outre un deuxième organe creux (31) fixé à l'intérieur du premier organe creux (30), dans lequel le fil en alliage à mémoire de forme (5) est inséré dans le deuxième organe creux (31), et une extrémité du deuxième organe creux qui n'est pas fixée au premier organe creux (30) est arrimée fixement à une extrémité du fil en alliage à mémoire de forme (5).

5. Actionneur en alliage à mémoire de forme selon la revendication 4, dans lequel le deuxième organe creux (31) est courbable.
